# EUROPEAN PATENT SPECIFICATION

(11) **EP 4 536 610 B1**
(45) Date of publication and mention of the grant of the patent: **01.07.2026**
(21) Application number: 23730825.9
(22) Date of filing: 08.06.2023
(51) Int. Cl.: C04B 40/06, C04B 18/04, C04B 18/12, C04B 28/02, C04B 28/04

(54) **PROCESS FOR PREPARING A BICOMPONENT MORTAR, SAID BICOMPONENT MORTAR AND USE OF SAID BICOMPONENT MORTAR**
VERFAHREN ZUR HERSTELLUNG EINES ZWEIKOMPONENTEN-MÖRTELS, ZWEIKOMPONENTEN-MÖRTEL UND VERWENDUNG DES ZWEIKOMPONENTEN-MÖRTELS
PROCÉDÉ DE PRÉPARATION D'UN MORTIER BICOMPOSANT, MORTIER BICOMPOSANTET UTILISATION DUDIT MORTIER BICOMPOSANT

(30) Priority: 10.06.2022 IT 202200012386
(43) Date of publication of application: 16.04.2025
(73) Proprietor: Politecnico Di Torino, 10129 Torino (IT)
(72) Inventor: TODARO, Carmine, 10129 Torino (IT); PEILA, Daniele, 13100 Vercelli (IT)
(74) Representative: Bettello, Pietro
(86) International application number: PCT/EP2023/065346
(87) International publication number: WO 2023/237657

(56) References cited:
- EP-A1- 2 634 151
- WO-A1-2015/078985
- WO-A1-2021/046585
- WO-A1-2021/204962

## Description

The present invention concerns a process for preparing a bicomponent mortar, said bicomponent mortar and the use of said bicomponent mortar for a backfilling operation. Marble slurry is a dehydrated carbonate sludge produced by the activity of extraction and/or sawing of natural stones such as marble and granite and by the processes of the washing water treatment plant for the marble sawmill blades.

This material, even if it is not a dangerous pollutant, cannot and should not be dispersed in the environment, because the excessive accumulation of mineralogical substance (even if not toxic), creates big ecological issues of various kind in the long run.

To date, the only way to properly dispose of the marble slurry is to transport it from the processing area to suitable waste treatment plants; however, not infrequently, even in large quantities, it is abandoned within the quarry area, and remains exposed to the action of meteorological atmospheric agents, generating a significant impact on the environment, in particular on the water resource.

Rivers in the areas close to marble quarries often show turbidity phenomena due to the marble slurry that, occluding the interstices between the pebbles, destroys the varieties of the microenvironments and the possibilities of settlement of the aquatic organisms.

The pollution of groundwater and springs, most of which are collected for hydropotable purposes, although it is even more serious than that of surface waters, is less perceived, because it is not directly visible.

There is therefore a strong need to find a way to be able to exploit this waste material to avoid excessive environmental pollution. It is good to consider that the operations of disposal of the marble slurry, in most cases, constitute an expenditure for those who have to deal with it and are therefore perceived as an unwelcome obligation; the opposite would be the case in which the waste material could be resold to companies interested in exploiting it for their commercial activity.

An object of the present invention is to disclose a process for preparing a bicomponent mortar comprising therein a predefined amount of marble slurry.

As known in the art, the bicomponent mortar is used for backfilling operations, i.e. a technique used during the excavation of a tunnel by means of a shielded machine (shield TBM: Shield Tunnel Boring Machine) to fill the empty space created during the advancement of the machine.

A shielded machine has the excavation head followed by a steel shield that creates an enclosed environment capable of guaranteeing stability and safety when mounting the prefabricated cladding. A tunnel is known to be composed of a series of adjacent rings each comprising different prefabricated segments with an arc-shaped circumference.

When a shielded machine advances, the segments are transported from the outside as far as under the shield, where they are assembled under the protection of the shield itself. The last assembled ring is pressed against the previous ones by jacks controlled by the shielded machine.

For geometric reasons, it is therefore evident that the outer diameter of the assembled ring (extrados of the assembled ring) is smaller than the inner diameter of the shield (intrados of the shield). This gap, called annulus, must be constantly filled, in order to avoid surface subsidences, block the rings in the designated position, support the weight of the segments that will be transported to assemble the next rings and distribute any punctual loads. Usually the annulus has dimensions of 130 - 180 mm, or in any case variable depending on the diameter of the excavation head (the larger the diameter, the greater the thickness of the annulus).

Backfilling is therefore the technique of filling the annulus and for this purpose a bicomponent mortar can be used. The latter, as its name says, consists of two components: a component A, generally composed of cement, water, bentonite and retarder, stabilized in order to guarantee its workability for a time long enough for dosing, transport and injection operations; an accelerator (component B) added to the mortar a few moments before it is introduced into the annulus.

The mixture gels a few seconds after adding the accelerator, usually 6-12 seconds, during which the shielded machine advances to continue the excavation. The gel has a thixotropic consistency and begins to instantly develop the mechanical strength that does not allow the ring to move.

The bicomponent mortar is inj ected under pressure through appropriate nozzles of the shielded machine all the time and is able to completely fill the annulus.

The characteristics of the different components of the bicomponent mortar are analysed below:
- cement: preferably a cement with high strength class is used, for example 42.5 or 52.5 MPa;
- bentonite: is traditionally used in combination with cement for numerous applications concerning soils and rock clusters such as for example consolidation or backfilling operations. The main reason why it is used together with cement is the tendency of the latter to separate when suspended with water and this fact is amplified in the presence of water-cement ratios greater than 1.0, as is the case for the injections of bicomponent mortar. Bentonite is therefore used to reduce bleeding as much as possible, that is the separation between particles and water; bentonite is therefore essential for the stabilization of component A. The term bentonite is used to represent any clay of the group of smectite clays with high absorption capacity; the dominant clay mineral in its inside is montmorillonite;
- the retarder: is any substance that, as the name suggests, delays the hardening time of the cement; this feature allows component A to be stored for a short time before mixing it with component B without it solidifying; many commercial products, in addition to the retarding action, perform a fluidifying action. These products reduce the demand for water to produce a concrete of desired workability and increased strength with the same cement content. Some examples of retarders consist of phosphoric acids, phosphates and sucrose-based additives;
- the accelerator: is any substance that can alter the rate of the chemical reaction between cement particles and water. For the bicomponent mortars, only silicone mixtures are used. An accelerator is added to the concrete in order to reduce the hardening times.

For a bicomponent mortar, the gel time is very important, which must not be excessively high precisely because of the load-bearing function that the mortar must perform, immediately supporting the different rings that make up the tunnel and for this reason it is usually less than 10 - 15 seconds. If this were not the case, the segments would move from their ideal position and there would a risk of subsidences and collapses of the structures on the surface.

One of the innovations disclosed in this document consists in the use of the marble slurry within the process for preparing the bicomponent mortar. In other words, the marble slurry will constitute a new ingredient, which will be added to water, bentonite, cement and retarder in the production of component A of the bicomponent technology. With this solution, in addition to giving a valid use to the marble slurry, the mechanical strengths of the bicomponent mortar are increased. To date, in order to have the same effect it is necessary to increase the dosage of the cement and/or that of the accelerator. Both these ingredients are expensive compared to the marble slurry and therefore with the solution according to the invention the obtainable bicomponent mortar, with the same performance with a bicomponent mortar with classic design mix, turns out to be less expensive.

The most important state of the art document is WO 2015/0789985 A1 which illustrates a process for preparing a two-component mortar comprising two separate components: a mortar mixture comprising cement, bentonite, a retarder, and water, and an accelerating mixture comprising an accelerating component, and water. The purpose of this invention is to provide an alternative process for preparing the mortar formulation, which is more effective than that obtainable with known processes. Other state of the art documents are WO 2021/204962 A1, EP 2634151 A1 and WO 2021/046585 A1.

In the art there are no teachings suggesting mixing the marble slurry for the purpose of obtaining a bicomponent mortar since, as described above, this material is perceived as a waste it is necessary to get rid of.

Furthermore, during some tests carried out by the Applicants, other fine powders similar to the marble slurry proved unsuitable for inclusion in the mix design of the bicomponent mortar as they reduce the mechanical strengths it can provide. The use of the marble slurry in the mix-design of the bicomponent mortar therefore surprisingly overcomes the technical prejudice according to which the introduction of fine powders in the composition of the bicomponent mortar would necessarily reduce the mechanical strengths and the overall performance thereof. According to the teaching of the present invention, the marble slurry is used on the construction site exactly as for the other ingredients of component A; in other words, it is necessary to prepare a special silo, possibly near those for cement and bentonite, after which the mixing must be carried out by means of the classic high turbulence mixers, such as the turbomixer or colloidal mixers known in the art. Herein the terms "high turbulence mixer", "turbomixer" and "colloidal mixer" are used interchangeably.

Component A thus obtained will be used exactly as a classic component, i.e. mixed with component B a few cm from the nozzles that will inject the mix into the annulus.

No revolution in mix design or plant engineering of the construction site is necessary, except for an adjustment of the mixing times and an adjustment of the mix design with calibration of the retarder in order to counteract the slight increase in viscosity due to the addition of the marble slurry.

This invention will now be illustrated and described in detail with the aid of the attached drawing tables, where:
- Fig. 1 shows a schematic sectional view of a tunnel excavated with a shielded machine, in which the annulus to be filled with the backfilling operation is visible;
- Fig. 2 shows a schematic view of an example of a high turbulence mixer according to the state of the art.

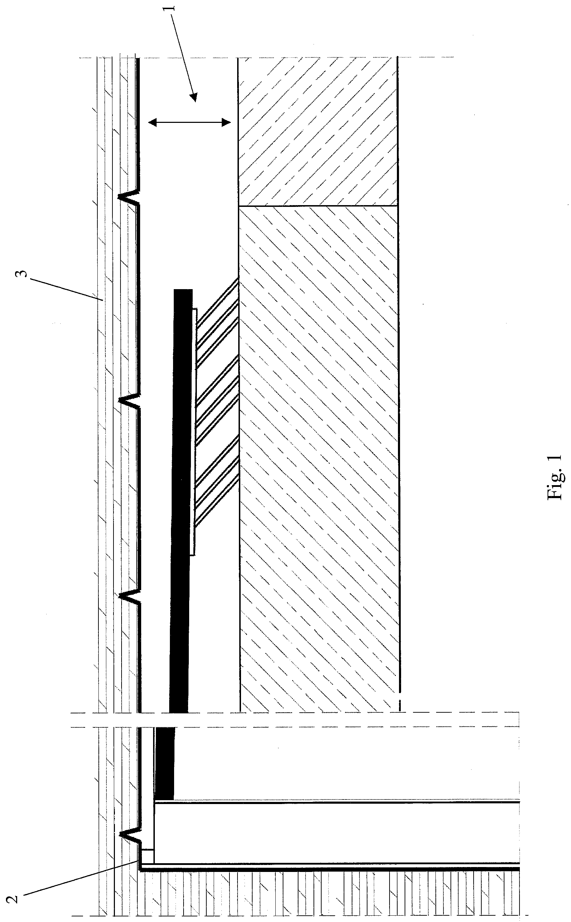

In fig. 1 the annulus is indicated with the reference number 1, the head of the shielded machine with the reference number 2 and the medium inside which the tunnel is being built (the medium being excavated, or excavated medium) with the reference number 3.

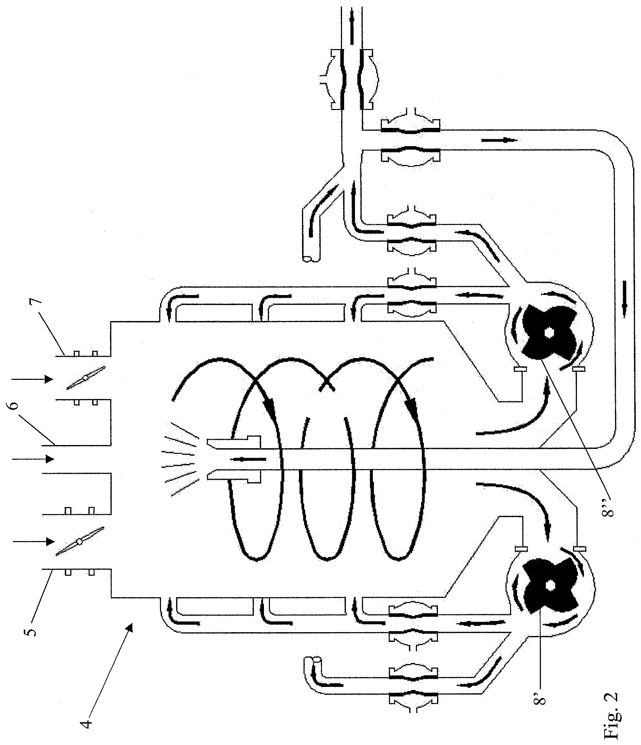

In the upper part of fig. 2 there are indicated with references 5, 6 and 7 the supply lines, respectively, for the cement, water and bentonite, which constitute the raw materials; in this figure two pumps are also visible, respectively indicated with references 8' and 8" that guarantee the introduction of a flow of water tangentially inside the mixing tank 4. It should be noted that an exemplary mixer, suitable for use in the process referred to in the invention, will also comprise an additional supply line dedicated to the marble slurry, which is not shown in fig. 2.

According to a process referred to in the invention, a bicomponent mortar is prepared by mixing a component A with a component B consisting of a predefined dosage of accelerator ("dosage", amount usually expressed in kg per m³). Component A is obtained by mixing through a high turbulence mixer a predefined dosage of cement, bentonite, water, marble slurry and retarder.

In a preferred embodiment it is envisaged that the predefined dosage in kg per cubic metre of cement is comprised between 230 and 480 Kg/m³, the predefined dosage in kg per cubic metre of water is comprised between 730 and 872 Kg/m³, the predefined dosage in kg per cubic metre of bentonite is comprised between 25 and 60 Kg/m³, the predefined dosage in kg per cubic metre of retarder is comprised between 1 and 7 Kg/m³, the predefined dosage in kg per cubic metre of accelerator is comprised between 50 and 100 Kg/m³ and the predefined dosage in kg per cubic metre of marble slurry is comprised between 40 and 150 Kg/m³.

To obtain a component A that can be stored for more than three days in a silo on the construction site, it is possible to proceed by first introducing the water into the high turbulence mixer, so as to stir it before the introduction of the bentonite. Then, cement and marble slurry are introduced; these two ingredients can be introduced into the mixer simultaneously or separately, without the order of insertion of the one relative to the other influencing the final result. Then the retarder is added.

It should be pointed out that the variability of the ranges is due to the incredible variability of the raw materials (type of water, cement, bentonite, etc.) depending on the geographical area of the construction site. In addition, the performance required by the designer of the bicomponent mortar also influences the dosage of the ingredients used. With reference to the marble slurry, a dosage higher than 150 kg/m³ can in any case be used provided that the dosage of retarder/fluidifier and accelerator is specially calibrated in order to keep the gel time above the preferential value of 4 seconds.

Preferably the amount of water inside the marble slurry is less than 5% by weight based on the total weight of the marble slurry, more preferably between 2 and 3% by weight based on the total weight of the marble slurry.

These dosage ranges allow to obtain a bicomponent mortar with excellent strength characteristics.

Component A must be a homogeneous mixture and for this reason the use of high turbulence mixers such as, for example, turbo mixers or colloidal mixers is required. This type of mixer creates turbulences inside it capable of eliminating the flocs from the mixture, thus ensuring its homogeneity.

If component A were not homogeneous, at the time of hardening of the bicomponent mortar there would be denser areas than others and this would create specific weaknesses that would risk breaking the hardened mortar.

The bicomponent mortar is then prepared by mixing together component A and component B, consisting of a predefined amount of accelerator. This mixing, for backfilling operations carried out by the shielded machines, takes place a few centimetres from the annulus to be filled. If this were not the case, the bicomponent mortar would begin to gel and harden before being injected into the annulus, without therefore obtaining the filling of the same.

Also in this case, in order to be able to obtain an optimal result in terms of performance, component A and component B can be mixed by using high turbulence nozzles that prevent the formation of flocs in the resulting mixture and ensure the production of a homogeneous and perfectly mixed material.

According to a particular solution, the nozzle carrying component B flows into the transport pipe of component A a few cm (for example 10 cm) before the nozzle that will dispense the bicomponent mortar still in the fluid state. The same result is obtained by inverting the components.

Two tanks are usually envisaged for backfilling operations, the former for component A and the latter for component B. From them the components are aspirated in by pumps that push them under pressure towards the site of use via two separate pipes. As discussed above, just before arriving at the nozzle for dispensing the fluid bicomponent mortar, the nozzle of one of the two pipes flows into the other pipe to mix component A to component B.

The technology of usage of the bicomponent mortar is a very sensitive technology, whose mix design is studied in depth to meet the needs required on site, both in the phase in which the components are in the liquid phase (therefore separated), and in the phase of mixing in the annulus (gelation process), and finally also in the hardening phase characterized by the mechanical strengths.

Backfilling does not play a long-term structural role, usually the required long-term strengths (t>28 days from the casting) are in fact of the order of a few MPa. On the other hand, the short-term mechanical performances (1-3h from the casting) are fundamental, since in this time the hardened mortar is stressed by the passage of the prefabricated segments for the assembly of the next rings.

The mixing time and hence the preparation time of component A carried out by means of turbomixers is usually less than 300 seconds and the mixing of the marble slurry in it takes about one minute. These data are cited by way of example and are not to be intended as limiting. The mixing times may vary depending on the characteristics of the specifications of the site where the backfilling operation is to be carried out and the turbomixer used.

Below are cited tests carried out by comparing the characteristics of two mix design of bicomponent mortar comprising marble slurry with a mix design without it.
MIX 1M: concrete 230 kg/m³, bentonite 30 kg/m³, marble slurry 50 kg/m³, water 834 kg/m³, fluidifier 3.5 kg/m³, accelerator 81 kg/m³
MIX 2M: concrete 230 kg/m³, bentonite 30 kg/m³, marble slurry 100 kg/m³, water 816 kg/m³, fluidifier 3.5 kg/m³, accelerator 81 kg/m³
Reference mix: cement 230 kg/m³, bentonite 30 kg/m³, water 853 kg/m³, fluidifier 3.5 kg/m³, accelerator 8 kg/m³.

In accordance with the most recent studies on the bicomponent mortars, the characterization of the same and the verification in situ that a given mortar meets the requirements of the specifications are carried out in accordance with experimental process aimed at testing:
- component A;
- the gel time (turbulent mixing of component A and B);
- the quality of the final mortar (component A + component B mixed, after gelling).

Component A consists of water, bentonite, marble slurry, retarding/fluidifying agent, while component B is an accelerator.

The tests carried out on component A are:
- density measurement (is typical of any mix design, depending on the amount of cement present, typical values are around 1.2 - 1.25 kg/L);
- time of Marsh cone efflux (is a measurement of the apparent viscosity made with the Marsh cone, typically around 36-40 seconds at time 0, tends to increase over time); and
- bleeding (is a measurement of stability, i.e. the ability of component A to remain physically stable over time is checked, thus not highlighting phenomena of segregation of cement and marble slurry at the bottom of the tested sample. After filling a standard backer, the bleeding is calculated by measuring the volume of water exuded on the surface and comparing it to the initial volume of the tested mixture, equal to 1 L).

The gelation reaction is studied by means of the "gel time", i.e. the interval of time that elapses between the first contact between components A and B and the loss of fluidity of the obtained mix (the values are variable depending on the percentage of accelerator used; typically they are between 4 and 15 seconds, although this parameter can be managed separately based on the lines of the machine and based on the needs of the construction site; for example, shorter gel times can be provided for the lines in the cap and higher gel time for the other lines, in order to try to completely fill the annulus).

The post-mix bicomponent mortar is tested with a penetrometer, calculating the SCS (Surface Compression Strength): the peak force necessary to penetrate a standard tip inside the surface of the specimen is calculated. The SCS is used for short-term tests (after 1h and 3h from the casting), which are however the crucial times in the process of installation of the segments and in the life of the injected annulus. The injected mortar is stressed by the passage of the prefabricated segments for the next rings in a time comprised between 1 and 3 hours.

The obtained results are given in the following Table 1.

| MIX | 1M | 2M | Reference mix |
|---|---|---|---|
| specific weight (kg/L) | 1.2 | 1.27 | 1.17 |
| Flow time (t0) (s) | 36 | 38 | 34.5 |
| Gel time (s) | 7 | 4 | 8 |
| SCS 1h (MPa) | 0.38 | 0.45 | 0.41 |
| SCS 3h (MPa) | 1.65 | 1.71 | 1.62 |
| Bleeding 1h (%) | 0.3 | 0 | / |
| Bleeding 3h (%) | 0.68 | 0 | 1.04 |
| Bleeding 24h (%) | 3.1 | 2.4 | 2.09 |

Based on the tests carried out and from a comparison with the reference design mix, the following comments can be made:
- an increase in density can be observed, due to the presence of the marble slurry (remember that the mix design is "drafted" as a water completion, that is, compared to the mix without marble slurry, a part of water has been replaced by marble powder);
- the gel time is lowered, depending on the dosage of the marble slurry used. It is a neutral effect (not positive, not negative). If a mix design with a longer gel time is needed, it is sufficient to increase the dosage of accelerator by 0.5-1%;
- the Marsh cone viscosity values are perfectly in line with those of the standard mixture. If lower values are needed for specific construction site needs, a slight calibration of the dosage of fluidifier will lower the viscosity;
- the bleeding results are excellent. At 3 hours there is less bleeding than the original mixture (and in any case, below the limit value of 1.5%), at 24 hours they are abundantly below the limit of 8%;
- the SCS with the highest dosage is always higher than the reference dosage. For the tests at 1 hour, the 1M dosage shows slightly lower values, but of the same order of magnitude compared to the 2M dosage.

From the above it can be observed how the addition of marble slurry in the mix design of the bicomponent mortar allows to give a noble role to this material perceived to date as a waste and which is the cause of high pollution in the areas near the marble quarries. In addition, the bicomponent mortar obtained with the process referred to in the invention allows to reduce the amount of cement and bentonite in the mix design, reducing the overall costs of the final product.

## Claims

1. PROCESS FOR PREPARING A BICOMPONENT MORTAR, comprising a step of mixing a component A with a component B consisting of a predefined dosage of accelerator, **characterised in that** component A is obtained by mixing a predefined dosage of cement, bentonite, water, marble slurry and retarder in a high turbulence mixer.

2. PROCESS FOR PREPARING A BICOMPONENT MORTAR, according to claim 1, wherein the predefined dosage in kg per cubic metre of cement is comprised between 230 and 480 kg/m³, the predefined dosage in kg per cubic metre of water is comprised between 730 and 872 kg/m³, the predefined dosage in kg per cubic metre of bentonite is comprised between 25 and 60 kg/m³, the predefined dosage in kg per cubic metre of retarder is comprised between 1 and 7 kg/m³, the predefined dosage in kg per cubic metre of accelerator is comprised between 50 and 100 kg/m³ and the predefined dosage in kg per cubic metre of marble slurry is comprised between 40 and 150 kg/m³.

3. PROCESS FOR PREPARING A BICOMPONENT MORTAR, according to any one of the preceding claims, wherein the mixing of component A and component B takes place by means of high turbulence nozzles.

4. PROCESS FOR PREPARING A BICOMPONENT MORTAR, according to any one of the preceding claims, wherein, for the preparation of component A, water is first introduced into the high turbulence mixer, followed by bentonite; then, cement and marble slurry are introduced in any order relative to each other, and finally, the retarder is added.

5. PROCESS FOR PREPARING A BICOMPONENT MORTAR, according to claim 4, wherein the cement and the marble slurry are introduced at the same time.

6. PROCESS FOR PREPARING A BICOMPONENT MORTAR, according to any of the preceding claims, wherein, following its preparation, component A is stored in a tank and component B is also stored in a tank;
subsequently, the two components are aspirated in by pumps that push them under pressure towards the site of use via two separate pipes, the nozzle of one of these pipes flowing into the other to mix components A and B just before arriving at the nozzle for dispensing the fluid bicomponent mortar.

7. PROCESS FOR PREPARING A BICOMPONENT MORTAR, according to any one of the preceding claims, wherein the high turbulence mixer is a turbomixer or a colloidal mixer.

8. PROCESS FOR PREPARING A BICOMPONENT MORTAR, according to any one of the preceding claims, wherein the marble slurry used has a water content of less than 5% by weight based on the total weight of the marble slurry and more preferably comprised between 2% and 3% by weight based on the total weight of the marble slurry.

9. BICOMPONENT MORTAR comprising cement, bentonite, water, marble slurry, retarder and accelerator mixed together.

10. USE OF BICOMPONENT MORTAR, according to claim 9, in a backfilling operation.

## Patentansprüche

1. VERFAHREN ZUR HERSTELLUNG EINES ZWEIKOMPONENTEN-MÖRTELS, umfassend einen Schritt des Mischens einer Komponente A mit einer Komponente B, bestehend aus einer vordefinierten Dosierung von Beschleuniger, **dadurch gekennzeichnet, dass** die Komponente A durch Mischen einer vordefinierten Dosierung von Zement, Bentonit, Wasser, Marmorschlamm und Verzögerer in einem Hochturbulenzmischer erhalten wird.

2. VERFAHREN ZUR HERSTELLUNG EINES ZWEIKOMPONENTEN-MÖRTELS nach Anspruch 1, wobei die vordefinierte Dosierung in kg pro Kubikmeter Zement zwischen 230 und 480 kg/m³ liegt, die vordefinierte Dosierung in kg pro Kubikmeter Wasser zwischen 730 und 872 kg/m³ liegt, die vordefinierte Dosierung in kg pro Kubikmeter Bentonit zwischen 25 und 60 kg/m³ liegt, die vordefinierte Dosierung in kg pro Kubikmeter Verzögerer zwischen 1 und 7 kg/m³ liegt, die vordefinierte Dosierung in kg pro Kubikmeter Beschleuniger zwischen 50 und 100 kg/m³ liegt und die vordefinierte Dosierung in kg pro Kubikmeter Marmorschlamm zwischen 40 und 150 kg/m³ liegt.

3. VERFAHREN ZUR HERSTELLUNG EINES ZWEIKOMPONENTEN-MÖRTELS nach einem der vorhergehenden Ansprüche, wobei das Mischen der Komponente A und der Komponente B mittels hochturbulenter Düsen erfolgt.

4. VERFAHREN ZUR HERSTELLUNG EINES ZWEIKOMPONENTEN-MÖRTELS nach einem der vorhergehenden Ansprüche, wobei zur Herstellung der Komponente A zuerst Wasser in den Hochturbulenzmischer eingebracht wird, gefolgt von Bentonit; dann Zement und Marmorschlamm in beliebiger Reihenfolge relativ zueinander eingebracht werden und schließlich der Verzögerer zugegeben wird.

5. VERFAHREN ZUR HERSTELLUNG EINES ZWEIKOMPONENTEN-MÖRTELS nach Anspruch 4, wobei der Zement und der Marmorschlamm gleichzeitig eingebracht werden.

6. VERFAHREN ZUR HERSTELLUNG EINES ZWEIKOMPONENTEN-MÖRTELS nach einem der vorhergehenden Ansprüche, wobei nach seiner Herstellung die Komponente A in einem Tank gelagert wird und die Komponente B ebenfalls in einem Tank gelagert wird; anschließend werden die zwei Komponenten durch Pumpen angesaugt, die sie über zwei getrennte Rohre unter Druck zum Einsatzort drücken, wobei die Düse eines dieser Rohre in das andere strömt, um die Komponenten A und B zu mischen, kurz bevor sie die Düse zum Abgeben des flüssigen Zweikomponenten-Mörtels erreichen.

7. VERFAHREN ZUR HERSTELLUNG EINES ZWEIKOMPONENTEN-MÖRTELS nach einem der vorhergehenden Ansprüche, wobei der Hochturbulenzmischer ein Turbomischer oder ein kolloidaler Mischer ist.

8. VERFAHREN ZUR HERSTELLUNG EINES ZWEIKOMPONENTEN-MÖRTELS nach einem der vorhergehenden Ansprüche, wobei der verwendete Marmorschlamm einen Wassergehalt von weniger als 5 Gew.- %, bezogen auf das Gesamtgewicht des Marmorschlamms, und bevorzugter zwischen 2 und 3 Gew.- %, bezogen auf das Gesamtgewicht des Marmorschlamms, aufweist.

9. ZWEIKOMPONENTEN-MÖRTEL, umfassend Zement, Bentonit, Wasser, Marmorschlamm, Verzögerer und Beschleuniger, die zusammengemischt sind.

10. VERWENDUNG DES ZWEIKOMPONENTEN-MÖRTELS nach Anspruch 9 in einem Verfüllvorgang.

## Revendications

1. Procédé de préparation d'un mortier bicomposant, comprenant une étape de mélange d'un composant A avec un composant B constitué d'un dosage prédéfini d'accélérateur, **caractérisé en ce que** le composant A est obtenu par mélange d'un dosage prédéfini de ciment, de bentonite, d'eau, de boue de marbre et de retardateur dans un mélangeur à forte turbulence.

2. Procédé de préparation d'un mortier bicomposant selon la revendication 1, dans lequel le dosage prédéfini de ciment (en kg/m³) est compris entre 230 et 480 kg/m³, le dosage prédéfini d'eau (en kg/m³) est compris entre 730 et 872 kg/m³, le dosage prédéfini de bentonite (en kg/m³) est compris entre 25 et 60 kg/m³, le dosage prédéfini de retardateur (en kg/m³) est compris entre 1 et 7 kg/m³, le dosage prédéfini d'accélérateur (en kg/m³) est compris entre 50 et 100 kg/m³ et le dosage prédéfini de barbotine de marbre (en kg/m³) est compris entre 40 et 150 kg/m³.

3. Procédé de préparation d'un mortier bicomposant selon l'une quelconque des revendications précédentes, dans lequel le mélange des composants A et B est réalisé au moyen de buses à forte turbulence.

4. Procédé de préparation d'un mortier bicomposant selon l'une quelconque des revendications précédentes, dans lequel, pour la préparation du composant A, l'eau est d'abord introduite dans le mélangeur à forte turbulence, suivie de la bentonite ; ensuite, le ciment et la barbotine de marbre sont introduits successivement, dans un ordre quelconque ; et enfin, le retardateur est ajouté.

5. Procédé de préparation d'un mortier bicomposant selon la revendication 4, dans lequel le ciment et la barbotine de marbre sont introduits simultanément.

6. Procédé de préparation d'un mortier bicomposant selon l'une quelconque des revendications précédentes, dans lequel, après sa préparation, le composant A est stocké dans une cuve et le composant B est également stocké dans une cuve; par la suite, les deux composants sont aspirés par des pompes qui les propulsent sous pression vers le lieu d'utilisation via deux conduites distinctes, l'orifice de l'une de ces conduites se déverse dans l'autre afin de mélanger les composants A et B juste avant leur arrivée à la buse de distribution du mortier bicomposant fluide.

7. Procédé de préparation d'un mortier bicomposant selon l'une quelconque des revendications précédentes, dans lequel le mélangeur à forte turbulence est un turbomélangeur ou un mélangeur colloïdal.

8. Procédé de préparation d'un mortier bicomposant selon l'une quelconque des revendications précédentes, dans lequel la suspension de marbre utilisée présente une teneur en eau inférieure à 5 % en poids par rapport au poids total de la suspension de marbre et de préférence comprise entre 2 % et 3 % en poids par rapport au poids total de la suspension de marbre.

9. MORTIER BICOMPOSANT composé de ciment, de bentonite, d'eau, de boue de marbre, d'un retardateur et d'un accélérateur, mélangés.

10. UTILISATION DU MORTIER BICOMPOSANT, selon la revendication 9, lors d'une opération de remblayage.
